# EUROPÄISCHE PATENTANMELDUNG

(11) **EP 0 540 921 A1**
(43) Veröffentlichungstag der Anmeldung: **12.05.1993**
(21) Anmeldenummer: 92117734.1
(22) Anmeldetag: 16.10.1992
(51) Int. Cl.: B60R 22/46, B60R 22/28

(54) **Gurtstraffer für Fahrzeug-Sicherheitsgurtsysteme**

(30) Priorität: 07.11.1991 DE 4136623
(71) Anmelder: TRW REPA GMBH, D-73553 Alfdorf (DE)
(72) Erfinder: Föhl, Artur, W-7060 Schorndorf (DE)
(74) Vertreter: Degwert, Hartmut, Dipl.-Phys.

(57) **Zusammenfassung**

In einem Fahrzeug-Sicherheitsgurtsystem wird an einem zwischen einem Umlenkbeschlag (12) und dem Gurtaufroller (14) verlaufenden Gurtbandabschnitt (10) eine Greifeinrichtung (16) angeordnet. Im Ruhezustand ist das Gurtband freigängig zwischen den einander gegenüberliegenden Klemmelementen der Greifeinrichtung (16) hindurchgeführt. Die Greifeinrichtung (16) ist über ein Zugseil (38) an einen Gurtstraffer-Antrieb angeschlossen, der pyrotechnisch oder mechanisch ausgebildet sein kann. Eine Rücklaufsperre ist durch einen am Fahrzeugaufbau befestigten Zylinder (44) und einen darin verschiebbaren Kolben (42) gebildet, durch den die Zylinderwandung zum Abbau von Lastspitzen plastisch verformt wird.

## Beschreibung

Die Erfindung betrifft einen Gurtstraffer für Fahrzeug-Sicherheitsgurtsysteme mit einem Gurtstraffer-Antrieb und einer einem Gurtbandabschnitt zugeordneten mechanischen Gurtgreifeinrichtung, die über ein Zugübertragungselement an den Gurtstrafferantrieb angeschlossen ist, wobei das von der Greifeinrichtung abgewandte Ende des Zugübertragungselements mit dem Kolben einer Rücklaufsperreinrichtung verbunden ist, in deren am Fahrzeugaufbau befestigten Zylinder der Kolben in der Rückstrammrichtung unbehindert verschiebbar und in der entgegengesetzten Richtung zumindest bis zu einem vorbestimmten Schwellwert der am Kolben auftretenden Zuglast gesperrt ist.

Derartige Gurtstraffer sind aus der DE 34 13 488 bekannt. Für den Gurtstraffer-Antrieb wird der mit dem Zugübertragungselement verbundene Kolben in dem Zylinder durch ein Sperrmittel blockiert. Dabei wirkt eine vorgespannte Feder auf den Kolben und drückt den Kolben mit Lösen des Sperrmittels für den Gurtstraffervorgang in Richtung auf das freie Ende des Zylinders. Die Feder bildet dabei die Rücklaufsperreinrichtung.

Der Erfindung liegt die Aufgabe zugrunde, einen Gurtstraffer für Fahrzeugsicherheitsgurtsysteme derart auszubilden, daß eine leichte Konstruktion ermöglicht wird und mit der Belastungsspitzen im Gurtbandsystem nach dem Gurtstraffen abbaubar sind.

Diese Aufgabe wird bei einem Gurtstraffer der eingangs angegebenen Art erfindungsgemäß dadurch gelöst, daß der Kolben bei Überschreitung des vorbestimmten Schwellwertes unter plastischer Verformung der Zylinderwandung in diesem Zylinder verschiebbar ist.

Eine derartige Rücklauf-Sperreinrichtung hat einen geringen Raumbedarf und läßt sich wegen ihrer gestreckten Bauform leicht im Fahrzeug unterbringen. Die Belastungsspitzen im Gurtbandsystem werden dabei durch Energie-Wandlung abgebaut, indem der Kolben bei Überschreitung eines vorbestimmten Schwellwertes unter plastischer Verformung der Zylinderwandung in diesem Zylinder verschiebbar ist. Die Energeiwandlerfunktion läßt sich dabei durch Bemessung der Wandstärke des Zylinders steuern. Zweckmäßig ist eine Verstärkung der Zylinderwandung im Bereich des der Greifeinrichtung zugewandten Zylinderendes.

Die Kolben/Zylinder-Sperreinrichtung kann durch Kombination mit einem pyrotechnischen Gasgenerator zu einer Antriebs-Baugruppe kombiniert werden.

Gemäß einer weiteren Ausführungsform wird der Gurtstraffer-Antrieb von einem Fahrzeugteil abgeleitet, das bei einer unfallbedingten Verformung des vorderen Fahrzeugbereiches eine Relativbewegung zur Fahrgastzelle des Fahrzeugs ausführt. Der Kolben wird dann über eine Verbindungseinrichtung_{,} die bei einer vorbestimmten Zuglast nachgibt, mittels eines Zugseils an das Fahrzeugteil angeschlossen.

Weitere Vorteile und Merkmale der Erfindung ergeben sich aus der folgenden Beschreibung und aus der Zeichnung, auf die Bezug genommen wird.

In der Zeichnung zeigen:
- Fig. 1: eine Perspektivansicht eines Fahrzeug-Sicherheitsgurtsystems mit Gurtstraffer;
- Fig. 2: eine Schnittansicht einer Greifeinrichtung des Gurtstraffers nach Fig. 1;
- Fig. 3: eine Draufsicht der in Fig. 2 gezeigten Greifeinrichtung;
- Fig. 4: eine Perspektivansicht zweier Klemmelemente der in den Fig. 2 und 3 gezeigten Greifeinrichtung;
- Fig. 5: einen Längsschnitt einer Kolben/Zylinder-Rücklauf-Sperreinrichtung in einer ersten Ausführung;
- Fig. 6: einen Längsschnitt einer zweiten Ausführungsform der Rücklauf-Sperreinrichtung;
- Fig. 7: einen Längsschnitt einer kombinierten Antrieb/Rücklaufsperre-Baugruppe; und
- Fig. 8: einen Querschnitt durch Kolben und Zylinderwandung einer Rücklauf-Sperreinrichtung nach erfolgter Gurtstraffung und Energiewandlung.

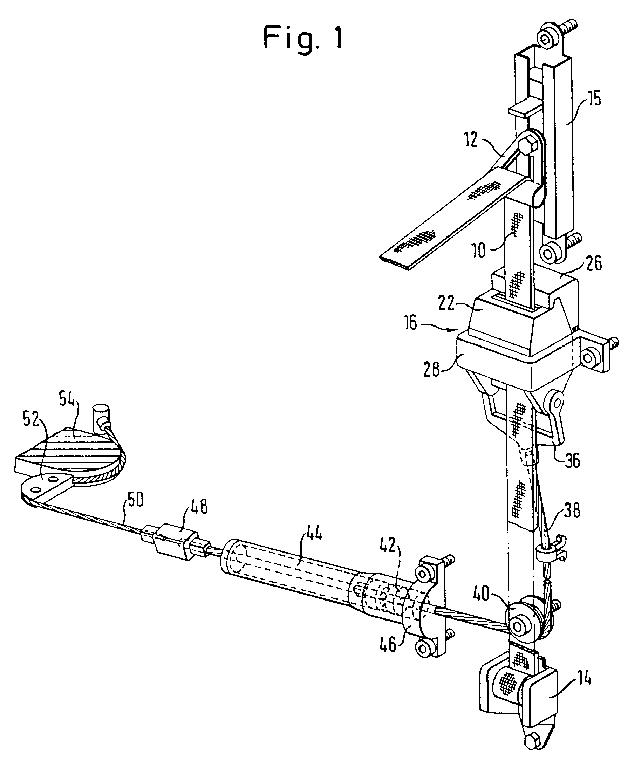

Bei dem in Fig. 1 gezeigten Sicherheitsgurtsystem verläuft ein Gurtbandabschnitt 10 annähernd senkrecht von einem Umlenkbeschlag 12 zu einem Gurtaufroller 14, der in der B-Säule des Fahrzeugs angebracht ist, ebenso wie ein Höhenversteller 15, an dem der Umlenkbeschlag 12 höhenverstellbar gelagert ist.

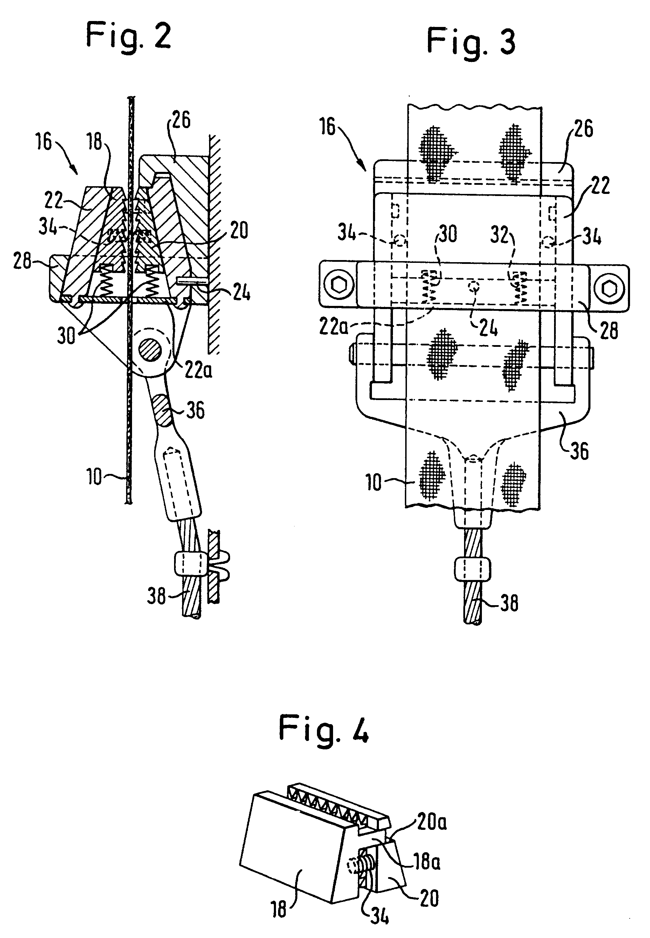

An dem Gurtbandabschnitt 10 ist eine Greifeinrichtung 16 angeordnet. Diese Greifeinrichtung 16, die in den Fig. 2, 3 und 4 im einzelnen gezeigt ist, besteht aus zwei keilförmigen Klemmteilen 18, 20, die beiderseits des Gurtbandabschnitts 10 in geringem Abstand von diesem angeordnet sind, und einem Aufnahmeteil 22, in dessen Innerem die Klemmteile 18, 20 aufgenommen sind und an dessen zur Richtung des Gurtbandverlaufs geneigten Innenflächen die unter gleichem Winkel zur Richtung des Gurtbandverlaufs geneigten Rückenflächen der Klemmteile 18, 20 abgestützt sind. Das Aufnahmeteil 22 ist bei der in den Figuren gezeigten Ruhestellung durch einen Scherstift 24 an einem Sockel 26 festgelegt, der am Fahrzeugaufbau verankert ist. Ein mittels Schrauben am Fahrzeugaufbau befestigter Haltebügel 28 umgreift das Aufnahmeteil 22 und hält dieses in einer definierten Ruhestellung. Der Sockel 26 bildet an seinem in der Zeichnung oberen Ende einen Anschlag für die benachbarte Stirnfläche des Klemmteils 20. Dieses ist, wie in Fig. 4 ersichtlich ist, mit dem gegenüberliegenden Klemmteil 18 durch seitliche Leisten 18a, die jeweils in eine entsprechende Nut 20a des Klemmteils 20 eingreifen, kraftschlüssig verbunden. Jedes Klemmteil 18, 20 wird durch zwei Druckfedern 30, 32 in Richtung des Gurtbandverlaufs zum Umlenkbeschlag 12 hin vorbelastet, wodurch die obere Stirnfläche des Klemmteils 20 am Anschlag des Sockels 26 in Anlage gehalten wird. Die Druckfedern 30, 32 sind auf ihrer von den Klemmteilen 18, 20 abgewandten Seite an einer Bodenplatte 22a des Aufnahmeteils 22 abgestützt. Die Klemmteile 18, 20 werden durch zwei beiderseits des Gurtbandes angeordnete Druckfedern 34 auseinander und in Anlage an die Innenflächen des Aufnahmeteils 22 gedrückt. Der Gurtbandabschnitt 10 verläuft frei und in geringem Abstand von den vorzugsweise mit einer Verzahnung versehenen Angriffsflächen der Klemmelemente 18, 20 zwischen diesen hindurch.

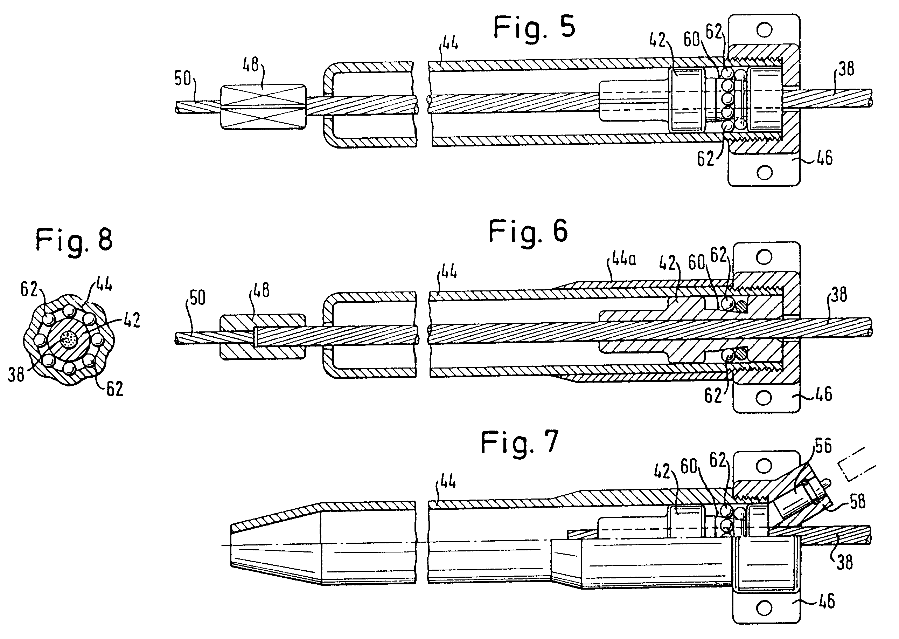

An dem Aufnahmeteil 22 ist mittels eines schwenkbaren Bügels 36 ein Zugübertragungselement in Form eines Zugseils 38 angeschlossen. Das Zugseil 38 ist über eine Umlenkrolle 40 geführt und an seinem von der Greifeinrichtung 16 abgewandten Ende mit einem Kolben 42 verbunden, der verschiebbar in der Bohrung eines Zylinders 44 aufgenommen ist. Der Zylinder 44 ist mittels einer Montageeinrichtung 46 am Fahrzeugaufbau festgelegt. Das Zugseil 38 ist, wie in den Fig. 5 und 6 ersichtlich, durch den Kolben 42 axial hindurchgeführt und über eine Verbindungseinrichtung 48 mit einem weiteren Zugseil 50 verbunden. Dieses Zugseil 50 ist über eine Umlenkeinrichtung 52 zu einem Fahrzeugteil 54 im vorderen Bereich des Fahrzeugs umgelenkt und bogenförmig um dieses herumgeführt sowie an seinem freien Ende an einem starren Fahrzeugaufbaubereich verankert. Das Fahrzeugteil 54, beispielsweise ein Teil des Getriebeblocks des Fahrzeugs, führt bei einer unfallbedingten Verformung des vorderen Fahrzeugbereichs eine Relativbewegung zur Fahrgastzelle des Fahrzeugs aus, an welcher das Ende des Zugseils 50 verankert ist. Durch diese Relativbewegung wird die Länge des Zugseils 50 zwischen der Umlenkeinrichtung 52 und dem Kolben 42 verkürzt, so daß ein Zug über das Zugseil 38 und den Bügel 36 auf das Aufnahmeteil 22 übertragen wird. Bei dieser Ausführungsform ist also der Gurtstraffer-Antrieb von einem Fahrzeugteil abgeleitet, welches bei einer unfallbedingten Verformung des vorderen Fahrzeugbereiches eine Relativbewegung zur Fahrgastzelle des Fahrzeugs ausführt.

Bei der in Fig. 7 gezeigten Ausführungsform ist hingegen ein pyrotechnischer Antrieb vorgesehen, mit einer Gasgeneratorpatrone 56, die in einen an das eine Ende des Zylinders 44 angeschlossenen Rohrstutzen 58 eingesetzt ist, welcher in den Zylinderraum vor dem Kolben 42 mündet. Bei Zündung der Gasgeneratorpatrone 56 wird der Kolben 42 durch die dann erzeugten Druckgase im Zylinder 44 vorgeschoben, so daß ein Zug auf das Zugseil 38 ausgeübt wird.

Wenn bei Aktivierung des Gurtstraffer-Antriebs eine Zugkraft auf das Aufnahmeteil 22 ausgeübt wird, wird zunächst der Scherstift 24 abgeschert. Alsdann wird das Aufnahmeteil 22 abwärts bewegt, wobei zugleich die Klemmelemente 18, 20 durch die Druckfedern 30, 32 vorgeschoben werden, so daß ihre Angriffsflächen mit dem Gurtband in Eingriff gelangen, da die Druckfedern 30, 32 stärker dimensioniert sind als die Druckfedern 34. Durch die Keilform der Klemmelemente 18, 20 wird bei weiterer Abwärtsbewegung des Aufnahmeteils 22 die Klemmung des Gurtbandes selbsttätig verstärkt. Das durch die Greifeinrichtung erfaßte Gurtband wird nun mitgenommen und in Richtung des Gurtaufrollers 14 verlagert, wobei die Gurtlose aus dem Gurtsystem herausgezogen wird. Der Hub des Gurtstraffers ist spätestens dann beendet, wenn der Kolben 42 am freien Ende des Zylinders 44 angekommen ist. Bei der in Fig. 1 gezeigten Ausführungsform ist die Verbindungseinrichtung 48 so dimensioniert, daß sie dann, bei weiterer Steigerung der Zugkraft über das Zugseil 50, nachgibt und das Zugseil 50 von dem Zugseil 38 abkoppelt.

Der Kolben 42 ist in dem Zylinder 44 in Richtung zu dessen freiem Ende hin, also in der Rückstrammrichtung, frei beweglich. In der entgegengesetzten Richtung wird seine Bewegung jedoch durch ein Kugel-Klemmgesperre behindert. Dieses Kugel-Klemmgesperre besteht aus mehreren über den Umfang einer Rampenfläche 60 am Kolben 42 verteilten Kugeln 62, deren Außenumfang der Innenwandung des Zylinders 44 gegenüberliegt. Durch die Rampenfläche 60 des Kolbens 42 werden die Kugeln 62 bei der Rückbewegung des Kolbens 42 in Richtung der Umlenkrolle 40 radial auswärts gegen die Innenwandung des Zylinders 44 gedrückt. Eine Weiterbewegung ist nur unter plastischer Verformung der Wandung des Zylinders 44 möglich. Bei dieser plastischen Verformung wird Arbeit verrichtet, so daß eine zum Abbau von Lastspitzen im Gurtband erwünschte Energiewandlung stattfindet, sobald ein vorbestimmter Wert der Zuglast im Zugseil 38 überschritten wird. Die gezeigte Ausbildung von Kolben 42 und Zylinder 44 bildet somit eine Rücklauf-Sperreinrichtung und zugleich einen Energiewandler zum Abbau von Lastspitzen im Gurtband. Fig. 8 zeigt die plastische Verformung der Wandung des Zylinders 44.

Bei den in Fig. 6 und 7 gezeigten Ausführungsformen ist das der Montageeinrichtung 46 benachbarte Ende des Zylinders 44 verstärkt, so daß die Schwelle angehoben wird, ab der eine plastische Verformung stattfindet. Durch Bemessung der Wandstärke des Zylinders 44 kann der Energiewandler mit der gewünschten Kennlinie ausgestattet werden. Bei der Ausführungsform nach Fig. 6 erfolgt die Verstärkung des Zylinders 44 durch eine aufgeschobene Hülse 44a; bei der Ausführungsform nach Fig. 7 ist in dem entsprechenden Bereich des Zylinders 44 seine Wandstärke vergrößert.

Außer den beschriebenen Formen eines Gurtstraffer-Antriebs kommen andere bekannte Ausführungen in Betracht, beispielsweise mechanische Antriebe mit einer gespannt gehaltenen Feder.

## Patentansprüche

1. Gurtstraffer für Fahrzeugsicherheitsgurtsysteme mit einem Gurtstraffer-Antrieb und einer einem Gurtbandabschnitt (10) zugeordneten mechanischen Gurtgreifeinrichtung (16), die über ein Zugübertragungselement (36, 38) an den Gurtstraffer-Antrieb angeschlossen ist, wobei das von der Greifeinrichtung (16) abgewandte Ende des Zugübertragungselements (38) mit dem Kolben (42) einer Rücklauf-Sperreinrichtung verbunden ist, in deren am Fahrzeugaufbau befestigtem Zylinder (44) der Kolben (42) in der Rückstrammrichtung unbehindert verschiebbar und in der entgegengesetzten Richtung zumindest bis zu einem vorbestimmten Schwellwert der am Kolben (42) auftretenden Zuglast gesperrt ist, **dadurch gekennzeichnet,** daß der Kolben (42) bei Überschreitung des vorbestimmten Schwellwertes unter plastischer Verformung der Zylinderwandung in diesem Zylinder (44) verschiebbar ist.

2. Gurtstraffer nach Anspruch 1, **dadurch gekennzeichnet,** daß die Zylinderwandung im Bereich des der Greifeinrichtung (16) zugewandten Zylinderendes verstärkt ist.

3. Gurtstraffer nach Anspruch 1 oder 2, **dadurch gekennzeichnet,** daß der Kolben (42) in dem Zylinder (44) durch einen pyrotechnischen Gasgenerator (56) beaufschlagbar ist, der mit dem Kolben (42) und dem Zylinder (44) den Gurtstraffer-Antrieb bildet.

4. Gurtstraffer nach einem der Ansprüche 1 bis 3, **dadurch gekennzeichnet,** daß der Kolben (42) über eine bei einer vorbestimmten Zuglast nachgebende Verbindungseinrichtung (48) an den Gurtstraffer-Antrieb angeschlossen ist, welcher von einem Fahrzeugteil (54) abgeleitet ist, das bei einer unfallbedingten Verformung des vorderen Fahrzeugbereiches eine Relativbewegung zur Fahrgastzelle des Fahrzeugs ausführt.
